# EUROPEAN PATENT APPLICATION

(11) **EP 4 631 788 A1**
(43) Date of publication of application: **15.10.2025**
(21) Application number: 23900583.8
(22) Date of filing: 01.12.2023
(51) Int. Cl.: B60Q 1/14, B60Q 1/04, H05B 45/14, H05B 45/38, H05B 45/50, H05B 45/325, H05B 45/345, H05B 45/375, H05B 45/395, H05B 47/14, H05B 47/20, H05B 47/165

(54) **VEHICLE LAMP**

(30) Priority: 06.12.2022 JP 2022195056; 15.12.2022 JP 2022200152
(71) Applicant: Koito Manufacturing Co., Ltd., Shinagawa-ku, Tokyo 141-0001 (JP)
(72) Inventor: MOMOSE, Kazuya, Shizuoka-shi Shizuoka 424-8764 (JP); NISHIMURA, Taisei, Shizuoka-shi Shizuoka 424-8764 (JP)
(74) Representative: Algemeen Octrooi- en Merkenbureau B.V.
(86) International application number: PCT/JP2023/043160
(87) International publication number: WO 2024/122468

(57) **Abstract**

A light-emitting unit 110 includes a first semiconductor light-emitting element 112 for low beam illumination, and a second semiconductor light-emitting element 114 for high beam illumination. A first drive module 120 is structured to drive the first semiconductor light-emitting element 112. A second drive module 140 is structured to drive the second semiconductor light-emitting element 114. A first converter controller 124 is structured to feedback control a first DC/DC converter 122, so as to bring a first drive current I_{DRVL} generated by the first DC/DC converter 122 close to a first reference level I_{REFL1}. The second drive module 140 is structured to transmit a dimming instruction signal DIM to the first drive module 120, in response to lighting instruction for the high beam illumination. The first drive module 120 is structured to reduce the first drive current I_{DRVL} to a second reference level I_{REFL2} lower than the first reference level I_{REFL1,} in response to the dimming instruction signal DIM.

## Description

### TECHNICAL FIELD

The present disclosure relates to a vehicle lamp used for automobile or the like.

### BACKGROUND ART

In recent years, semiconductor light sources including light-emitting diode (LED) and laser diode (LD) have been more widely used for light source of vehicle lamps such as high-beam, low-beam, and rear combination lamps. The semiconductor light sources have advantages over conventional light sources such as high intensity discharge (HID) lamp and halogen lamp, in view of energy efficiency, easy maintainability, and design diversity, and the like.

### RELATED-ART LITERATURE

### PATENT LITERATURE

Patent Literature 1: JP 2010-241347 A
Patent Literature 2: JP 2011-098611 A

### SUMMARY OF INVENTION

### TECHNICAL PROBLEM

The vehicle lamps for commercial vehicles including trucks are demanded to reduce the cost. To meet the demand, currently lined up is a vehicle lamp in which a high beam light-emitting element and a low beam light-emitting element are unitized. Such vehicle lamp would increase heat generation during illumination in a high beam mode, since this mode requires both of the high beam light source and the low beam light source to be turned on concurrently, in order to satisfy light distribution requirements. Therefore, heat measure will be an important issue for the vehicle lamp having the high-beam and low-beam elements integrated therein. Some vehicle lamp intended particularly for commercial vehicles may be required to have a fan-less design, to address requirements on long-term reliability.

The present disclosure has been arrived at in consideration of such circumstances, and one exemplary embodiment thereof is to provide a vehicle lamp with heat measure, while satisfying the light distribution requirements.

### SOLUTION TO PROBLEM

One embodiment of the present disclosure relates to a vehicle lamp. The vehicle lamp includes: a light-emitting unit having a first semiconductor light-emitting element for low beam illumination, and a second semiconductor light-emitting element for high beam illumination; a first drive module structured to drive the first semiconductor light-emitting element; and a second drive module structured to drive the second semiconductor light-emitting element. The first drive module includes: a first DC/DC converter structured to supply a first drive current to the first semiconductor light-emitting element; and a first converter controller structured to feedback control the first DC/DC converter, so as to bring the first drive current generated by the first DC/DC converter close to a first reference level. The second drive module is structured to transmit a dimming instruction signal to the first drive module, in response to a lighting instruction for the high beam illumination. The first drive module is structured to reduce the first drive current to a second reference level lower than the first reference level, in response to the dimming instruction signal.

A vehicle lamp according to one embodiment of the present disclosure includes: a first semiconductor light-emitting element for low beam illumination; a second semiconductor light-emitting element for low beam illumination; a first lighting circuit structured to drive the first semiconductor light-emitting element, and to assert a first fault signal upon detection of abnormality; a second lighting circuit structured to drive the second semiconductor light-emitting element, and to assert a second fault signal upon detection of abnormality; and a latch circuit structured to assert a stop signal upon assertion of at least either the first fault signal or the second fault signal. The first lighting circuit and the second lighting circuit are structured to turn off the first semiconductor light-emitting element and the second semiconductor light-emitting element, in response to assertion of the stop signal.

Note that also free combinations of these constituents, and also any of the constituents and expressions exchanged among the method, apparatus, and system, are valid as the modes of the present disclosure. Also note that the description of this section (SOLUTION TO PROBLEM) does not describe all essential features of the invention, and thus also subcombinations of these features described may constitute the invention.

### ADVANTAGEOUS EFFECTS OF INVENTION

One aspect of the present disclosure enables heat measure while satisfying the light distribution requirements.

### BRIEF DESCRIPTION OF DRAWINGS

[Fig. 1] Fig. 1 is a block diagram illustrating a vehicle lamp according to Embodiment 1.
[Fig. 2] Fig. 2 is a waveform chart for explaining operation of the vehicle lamp illustrated in Fig. 1.
[Fig. 3] Fig. 3(a) is a diagram for explaining light distribution during low beam illumination, and Fig. 3(b) is a diagram for explaining light distribution during high beam illumination.
[Fig. 4] Fig. 4 is a block diagram illustrating a vehicle lamp illustrated in Fig. 1.
[Fig. 5] Fig. 5 is a circuit diagram illustrating an exemplary structure of a derating circuit.
[Fig. 6] Fig. 6 is a block diagram illustrating a second drive module according to Embodiment 2.
[Fig. 7] Fig. 7 is a block diagram illustrating a second drive module according to Embodiment 3.
[Fig. 8] Fig. 8 is a block diagram illustrating a vehicle lamp according to Embodiment 4.
[Fig. 9] Fig. 9 is drawing illustrating an exemplary low beam light distribution of a vehicle lamp illustrated in Fig. 8.

### DESCRIPTION OF EMBODIMENTS

### (Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. This outline is not an extensive overview of all possible embodiments, and is therefore intended neither to specify key elements of all embodiments, nor to delineate the scope of some or all of the embodiments. For convenience, the wording "one embodiment" may be used to designate a single embodiment (Example or Modified Example), or a plurality of embodiments (Examples or Modified Examples) disclosed in the present specification.

The vehicle lamp according to one embodiment includes: a light-emitting unit having a first semiconductor light-emitting element for low beam illumination, and a second semiconductor light-emitting element for high beam illumination; a first drive module structured to drive the first semiconductor light-emitting element; and a second drive module structured to drive the second semiconductor light-emitting element. The first drive module includes: a first DC/DC converter structured to supply a first drive current to the first semiconductor light-emitting element; and a first converter controller structured to feedback control the first DC/DC converter, so as to bring the first drive current generated by the first DC/DC converter close to a first reference level. The second drive module is structured to transmit a dimming instruction signal to the first drive module, in response to a lighting instruction for the high beam illumination. The first drive module is structured to reduce the first drive current to a second reference level lower than the first reference level, in response to the dimming instruction signal.

With this structure, the first drive module can recognize its current status as the high beam illumination, as a result of transmission of the dimming instruction from the second drive module to the first drive module. In response to the dimming instruction, the first drive module can reduce the first drive current to decrease light emission energy of the first semiconductor light-emitting element, thereby successfully suppressing a total heat generation of the light-emitting unit during the high beam illumination.

In one embodiment, the first converter controller may have an analog dimming terminal, and the first reference level may be based on a dimming voltage that appears on the analog dimming terminal. The first drive module may further include a dimming circuit structured to reduce the dimming voltage, in response to the dimming instruction signal. The first drive current can be reduced with use of a dimming pin owned by many of commercially available drive integrated circuits (IC), without adding a new pin.

In one embodiment, the second drive module may include a first linear regulator structured to be enabled in response to the lighting instruction for the high beam illumination, and an output voltage of the first linear regulator may be supplied as the dimming instruction signal to the first drive module.

In one embodiment, the vehicle lamp may further have an interface circuit structured to receive the lighting instruction for the high beam illumination; and a microcontroller structured to enable the first linear regulator, in response to the lighting instruction received by the interface circuit.

In one embodiment, the lighting instruction for the high beam illumination may be given as a power supply voltage to the second drive module, and the vehicle lamp may further have: a second linear regulator structured to operate upon supply thereto of the power supply voltage; and a microcontroller structured to enable the first linear regulator, upon supply thereto of an output voltage of the second linear regulator.

In one embodiment, the vehicle lamp may have a fan-less design. Commercial vehicles, for which long-term reliability is required, are sometimes demanded to have the fan-less design. The aforementioned structure can satisfy the demand.

A vehicle lamp according to one embodiment includes: a first semiconductor light-emitting element for low beam illumination; a second semiconductor light-emitting element for low beam illumination; a first lighting circuit structured to drive the first semiconductor light-emitting element, and to assert a first fault signal upon detection of abnormality; a second lighting circuit structured to drive the second semiconductor light-emitting element, and to assert a second fault signal upon detection of abnormality; and a latch circuit structured to assert a stop signal upon assertion of at least either the first fault signal or the second fault signal. The first lighting circuit and the second lighting circuit are structured to turn off the first semiconductor light-emitting element and the second semiconductor light-emitting element, in response to assertion of the stop signal.

In this structure, all semiconductor light-emitting elements (LEDs) turn off, upon detection of failure of any one of the plurality of LEDs. This exempts from requirements on visual telltale, so that the telltale will be no longer necessary.

In one embodiment, the first lighting circuit may be structured to determine abnormality, upon deviation of a voltage across the first semiconductor light-emitting element from a normal range, and
the second lighting circuit may be structured to determine abnormality, upon deviation of a voltage across the second semiconductor light-emitting element from a normal range.

In one embodiment, each of the first lighting circuit and the second lighting circuit may include: a DC/DC converter; and a controller circuit structured to feedback control the DC/DC converter, such that an output current of the DC/DC converter approaches a target current level.

### (Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the invention. All features and combinations thereof described in the embodiments are not always necessarily essential to the disclosure and invention.

In the present specification, a "state in which a member A is coupled to a member B" includes a case where the member A and the member B are physically and directly coupled, and a case where the member A and the member B are indirectly coupled while placing in between some other member that does not substantially affect the electrically coupled state, or does not degrade the function or effect demonstrated by the coupling thereof.

Similarly, a "state in which a member C is provided between the member A and the member B" includes a case where the member A and the member C, or the member B and the member C are directly coupled, and a case where they are indirectly coupled, while placing in between some other member that does not substantially affect the electrically coupled state among the members, or does not degrade the function or effect demonstrated by the members.

In the present specification, reference signs attached to electric signals such as voltage signal and current signal, or circuit elements such as resistor, capacitor, and inductor are defined to represent voltage value, current value, or circuit constants (resistivity, capacitance, and inductance) of the individual components as necessary.

### (Embodiment 1)

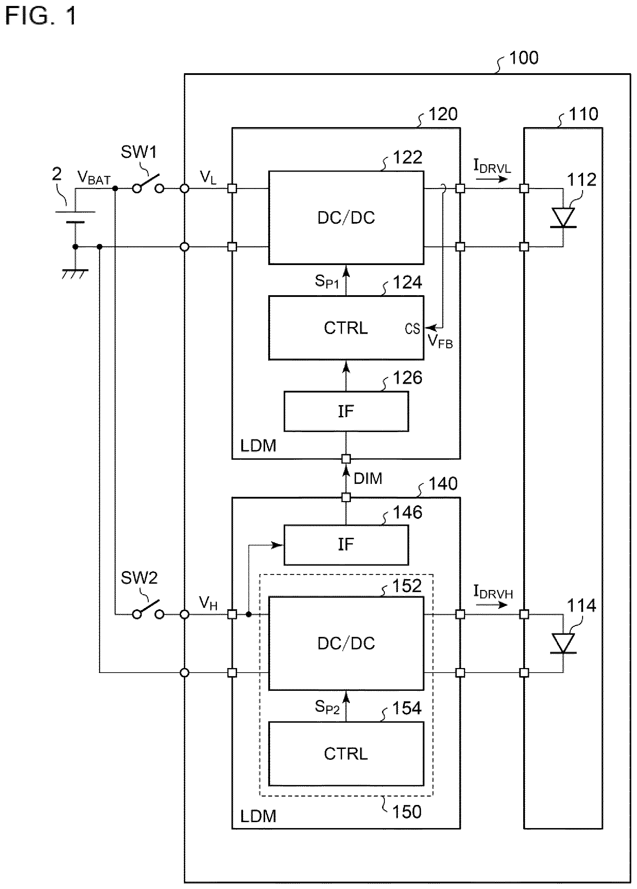

Fig. 1 is a block diagram illustrating a vehicle lamp 100 according to Embodiment 1. The vehicle lamp 100 includes a light-emitting unit 110, a first drive module 120, and a second drive module 140.

The light-emitting unit 110 includes a first semiconductor light-emitting element 112 for low beam illumination and a second semiconductor light-emitting element 114 for high beam illumination, which are integrated. The first semiconductor light-emitting element 112 and the second semiconductor light-emitting element 114 are typically mounted on a common printed circuit board. Light emitted from the first semiconductor light-emitting element 112, and light emitted from the second semiconductor light-emitting element 114 may transmit through a common optical system. Each of the first semiconductor light-emitting element 112 and the second semiconductor light-emitting element 114 may include one, or a plurality of light-emitting diode(s) (LED(s)). For example on the printed circuit board, the plurality of LEDs that constitute the first semiconductor light-emitting element 112 are arranged in a row in the horizontal direction, and adjacent thereto, the plurality of LEDs that constitute the second semiconductor light-emitting element 114 are arranged in a row in the horizontal direction. A common heat sink may be attached to the first semiconductor light-emitting element 112 and the second semiconductor light-emitting element 114.

The first drive module 120 turns on the first semiconductor light-emitting element 112, in response to a low beam lighting instruction. To the first drive module 120, voltage V_{BAT} from a battery 2 is supplied as an input voltage V_{L}, through a low beam switch SW1. In this embodiment, turn-on of the low beam switch SW1, and supply of the battery voltage V_{BAT} (V_{L}) to the first drive module 120 will serve as the low beam lighting instruction.

The first drive module 120 includes a first DC/DC converter 122, a first converter controller 124, and a first interface circuit 126.

The first DC/DC converter 122 causes switching according to a pulse modulation signal S_{P1} supplied from the first converter controller 124, and supplies a first drive current I_{DRVL} to the first semiconductor light-emitting element 112. The pulse modulation signal S_{P1} may typically be a pulse width modulation signal, or a pulse frequency modulation signal.

The first converter controller 124 generates the pulse modulation signal S_{P1} so as to bring the first drive current I_{DRVL} generated by the first DC/DC converter close to a first reference level I_{REFL1}, thereby causing feedback control (constant current control) of the first DC/DC converter 122. More specifically, the first converter controller 124 receives a feedback signal (current detection signal) V_{FB1} that corresponds to the first drive current I_{DRVL} on a current sense pin CS, and causes the feedback control of a duty cycle of the pulse modulation signal S_{P1}, so as to bring the feedback signal V_{FB} close to a first reference voltage V_{REF1}.

The first interface circuit 126 receives the dimming instruction signal DIM from the second drive module 140. The first interface circuit 126 acts on the first converter controller 124 in response to assertion of the dimming instruction signal DIM (high, for example), so as to reduce the first drive current I_{DRVL} down to a second reference level I_{REFL2} lower than the first reference level I_{REFL1}.

The second drive module 140 turns on the second semiconductor light-emitting element 114, in response to a lighting instruction for the high beam illumination. To the second drive module 140, voltage V_{BAT} from the battery 2 is supplied as an input voltage V_{H}, through a high beam switch SW2.

In this embodiment, the second drive module 140 includes a second lighting circuit 150 and a second interface circuit 146.

The second lighting circuit 150 controls the second drive current I_{DRVH} that flows through the second semiconductor light-emitting element 114, so as to form the light distribution for the high beam illumination. In this embodiment, the second lighting circuit 150 is structured similarly to the first drive module 120, and includes a second DC/DC converter 152 and a second converter controller 154.

The second DC/DC converter 152 causes switching according to a pulse modulation signal S_{P2} supplied from the second converter controller 154, and supplies a second drive current I_{DRVH} to the second semiconductor light-emitting element 114. The pulse modulation signal S_{P2} may typically be a pulse width modulation signal, or a pulse frequency modulation signal.

For example, the second converter controller 154 may subject the pulse modulation signal S_{P2} to feedback control (constant current control), so as to bring the second drive current I_{DRVH} generated by the second DC/DC converter 152 close to the second reference level I_{REF2}.

Alternatively, the second lighting circuit 150 may include a constant current source (not illustrated) connected in series with the second semiconductor light-emitting element 114. The second converter controller 154 in this case may be a constant voltage output converter that supplies the drive voltage V_{DRV2} to a series connection circuit of the second semiconductor light-emitting element 114 and the constant current source. The second converter controller 154 may alternatively subject the pulse modulation signal S_{P2} to feedback control, so as to bring the drive voltage V_{DRV2} close to the target voltage V_{REF2}.

The second drive module 140 also transmits the dimming instruction signal DIM to the first drive module 120, in response to the lighting instruction for the high beam illumination.

In this embodiment, turn-on of the high beam switch SW2, and supply of the battery voltage V_{BAT} (V_{H}) to the second drive module 140 will serve as the lighting instruction for the high beam illumination. The second interface circuit 146 asserts the dimming instruction signal DIM, upon supply thereto of the input voltage V_{H}.

The structure of the vehicle lamp 100 has been described above. Next, operations thereof will be explained.

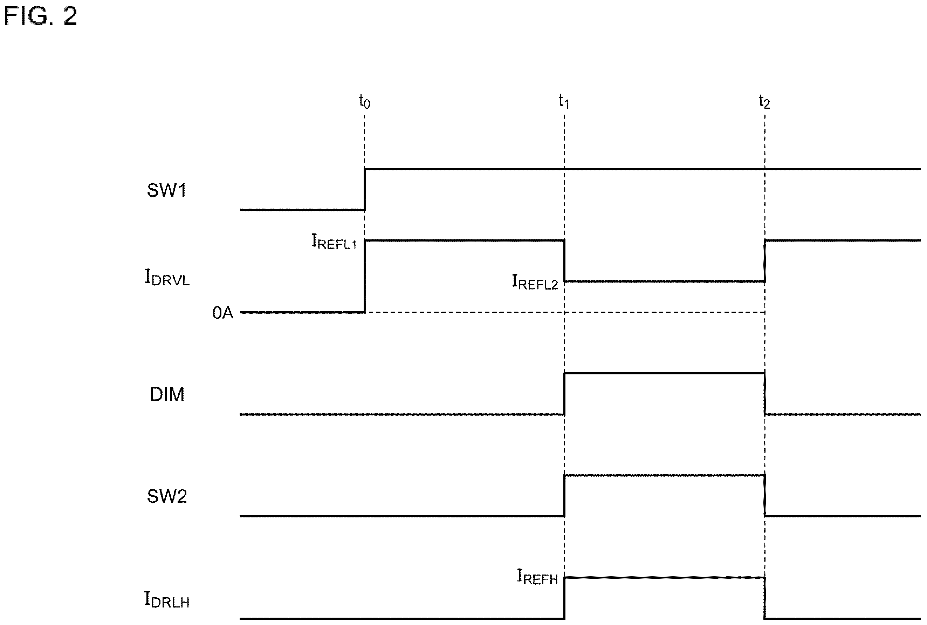

Fig. 2 is a waveform chart for explaining operation of the vehicle lamp 100 illustrated in Fig. 1. Before time to, the vehicle lamp 100 stays turned off. At time to, the low beam switch SW1 turns on, to generate a low beam lighting instruction. In response to the low beam lighting instruction, the first drive module 120 supplies the first drive current I_{DRVL} stabilized at the first reference level I_{REFL1}, to the first semiconductor light-emitting element 112. This causes the first semiconductor light-emitting element 112 to emit light having first luminance which is relatively brighter, thereby forming the low beam light distribution.

At time t₁, the high beam switch SW2 turns on, to generate the high beam lighting instruction. In response to the high beam lighting instruction, the second drive module 140 supplies the second drive current I_{DRVH}, to the second semiconductor light-emitting element 114. This causes the second semiconductor light-emitting element 114 to emit light, thereby forming the high beam light distribution.

Upon generation of the high beam lighting instruction at time t₁, the dimming instruction signal DIM is asserted. In response to the dimming instruction signal DIM, the first drive module 120 lowers the first drive current I_{DRVL} to be supplied to the first semiconductor light-emitting element 112, down to the second reference level I_{REFL2}. This causes the first semiconductor light-emitting device 112 to emit light, with the second luminance relatively lower than that ascribed to the low beam illumination only.

Upon turning off of the high beam switch SW2 at time t₂, the second drive current I_{DRVH} falls to 0 A, whereby the second semiconductor light-emitting element 114 turns off. In the second drive module 140, the dimming instruction signal DIM is negated. Upon negation of the dimming instruction signal DIM, the first drive module 120 returns the target current level of the first drive current I_{DRVL} to the first reference level I_{REFL1}. This causes the first semiconductor light-emitting element 112 to emit light at the first luminance which is relatively bright.

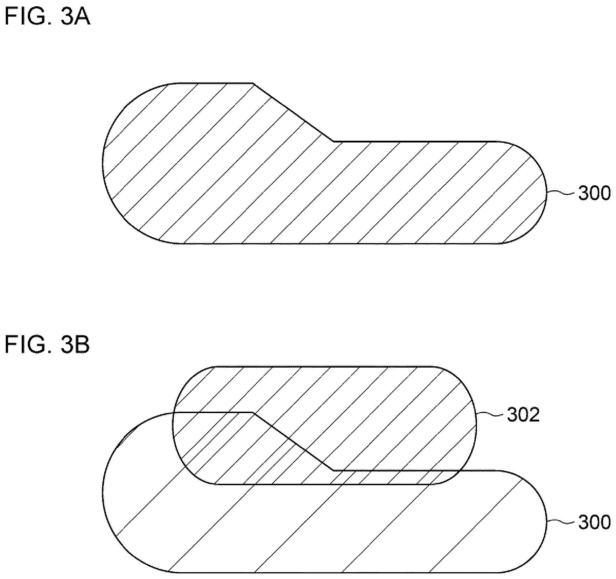

Fig. 3(a) is a diagram for explaining light distribution during the low beam illumination, and Fig. 3(b) is a diagram for explaining light distribution during the high beam illumination. As illustrated in Fig. 3(a) during the low beam illumination, the first semiconductor light-emitting element 112 emits light with the first luminance, so as to brightly illuminate a low beam illumination range 300. Density of the hatching corresponds to brightness, wherein the more dense, the brighter.

As illustrated in Fig. 3(b) during the high beam illumination, the second semiconductor light-emitting element 114 brightly illuminates a high beam illumination range 302. The first semiconductor light-emitting element 112 at this time emits the light with the second luminance darker than the first luminance, so that the low beam illumination range 300 becomes darker than during the low beam illumination illustrated in Fig. 3(a).

Operations of the vehicle lamp 100 have been described above.

With the vehicle lamp 100, the first drive module 120 can recognize the current status as high beam illumination, as a result of transmission of the dimming instruction signal DIM from the second drive module 140 to the first drive module 120 during the high beam illumination. Upon reduction of the first drive current I_{DRVL} by the first drive module 120 in response to the dimming instruction, the first semiconductor light-emitting element 102 can reduce the light emission energy, thereby successfully reducing the light emission energy, and suppressing the total calorific value of the light-emitting unit 110 from increasing during the high beam illumination.

The vehicle lamp 100 is suitable for a product line-up for commercial vehicles including trucks. This sort of vehicle lamp would occasionally be demanded to have a fan-less design, in pursuit of long-term reliability. This embodiment can suppress heat generation from the light-emitting unit 110, and can therefore ensure the reliability even in a fan-less design.

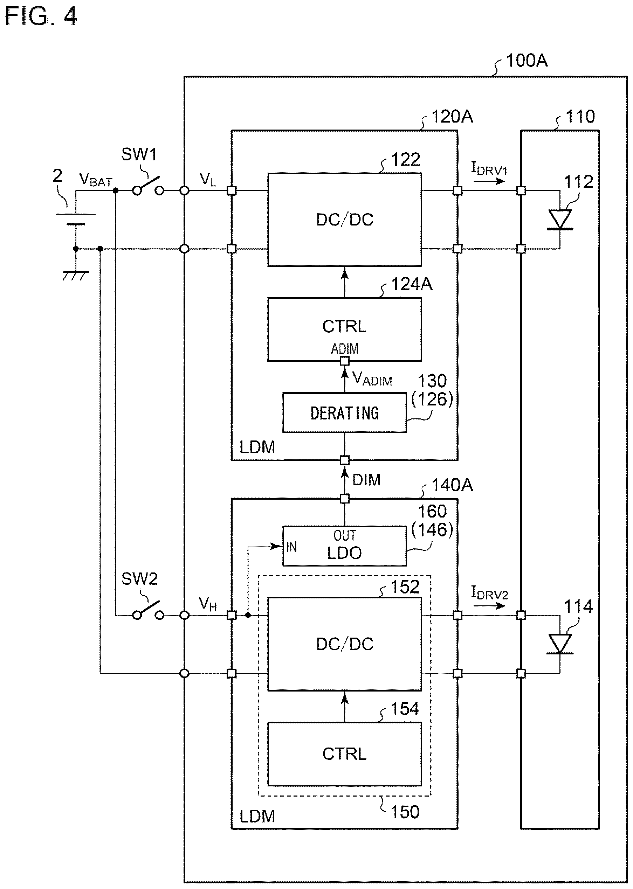

Fig. 4 is a block diagram illustrating an example 100A of the vehicle lamp 100 illustrated in Fig. 1.

A first converter controller 124A has an analog dimming terminal ADIM. A target current I_{REFL} of the first drive current I_{DRV1} is adjustable, according to a voltage V_{ADIM} at the analog dimming terminal ADIM. A first drive module 120A has a derating circuit 130. The derating circuit 130 functions as the first interface circuit 126 in Fig. 1.

The derating circuit 130 monitors temperature, and keeps the voltage V_{ADIM} at the analog dimming terminal ADIM at a certain constant level, if the temperature stays lower than a certain threshold value, whereas decreases the voltage V_{ADIM} at the analog dimming terminal ADIM as the temperature elevates (temperature derating), if the temperature exceeds the threshold value.

The dimming instruction signal DIM is input to the derating circuit 130. Upon assertion (high, for example) of the dimming instruction signal DIM, the derating circuit 130 decreases the voltage V_{ADIM} at the analog dimming terminal ADIM.

A second drive module 140A has a linear regulator 160. The linear regulator 160 functions as the second interface circuit 146 in Fig. 1. The linear regulator 160 has an input terminal IN connected to the high beam switch SW2, and an output terminal OUT connected to the derating circuit 130. The linear regulator 160 is activated upon supply of the input voltage V_{H} through the input terminal IN, and generates a voltage V_{LDO} stabilized at a predetermined voltage (5 V, for example) . The voltage V_{LDO} is supplied as the dimming instruction signal DIM, to the derating circuit 130.

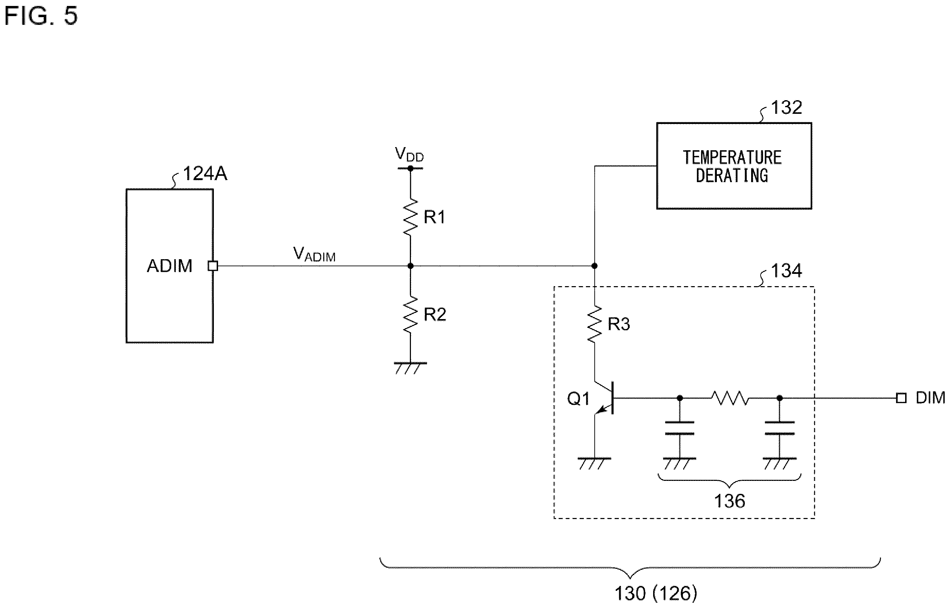

Fig. 5 is a circuit diagram illustrating an exemplary structure of the derating circuit 130. The derating circuit 130 has resistors R1 and R2, a temperature derating circuit 132, and a dimming circuit 134.

The resistors R1 and R2 constitute a resistor divider circuit connected in series between a power supply line V_{DD} and a ground line, wherein a connection node of the resistors R1 and R2 is connected to the analog dimming terminal ADIM of the first converter controller 124A. Given that outputs of the temperature derating circuit 132 and the dimming circuit 134 have high impedance, the voltage V_{ADIM} at the analog dimming terminal ADIM will be given by V_{DD} × R2/(R1 + R2).

The temperature derating circuit 132 has a temperature sensing element such as thermistor, and varies the output according to the temperature. The output of the temperature derating circuit 132 has high impedance, if the temperature is lower than the threshold value, and will not affect the analog dimming terminal ADIM. In the temperature range higher than the threshold value, the temperature derating circuit 132 will decrease the output impedance as the temperature elevates, and sinks more current. Accordingly, the higher the temperature, the lower the voltage V_{ADIM} at the analog dimming terminal ADIM will be.

Upon receiving the dimming instruction signal DIM, the dimming circuit 134 decreases the voltage V_{ADIM} at the analog dimming terminal ADIM, in response to assertion of the dimming instruction signal DIM. The dimming circuit 134 typically has a resistor R3, a transistor Q1, and a low-pass filter 136. The transistor Q1 has a base, to which the dimming instruction signal DIM is input through the low-pass filter 136. Upon assertion of the dimming instruction signal DIM, the transistor Q1 is brought into conduction. Due to parallel connection of the resistors R2 and R3 in this scheme, the voltage V_{ADIM} at the analog dimming terminal ADIM will be given by V_{DD} × (R2//R3)/{(R1 + (R2//R3)}, which is lower than V_{DD} × R2/(R1 + R2). Where, R2//R3 represents a parallel combined resistance of R2 and R3.

### (Embodiment 2)

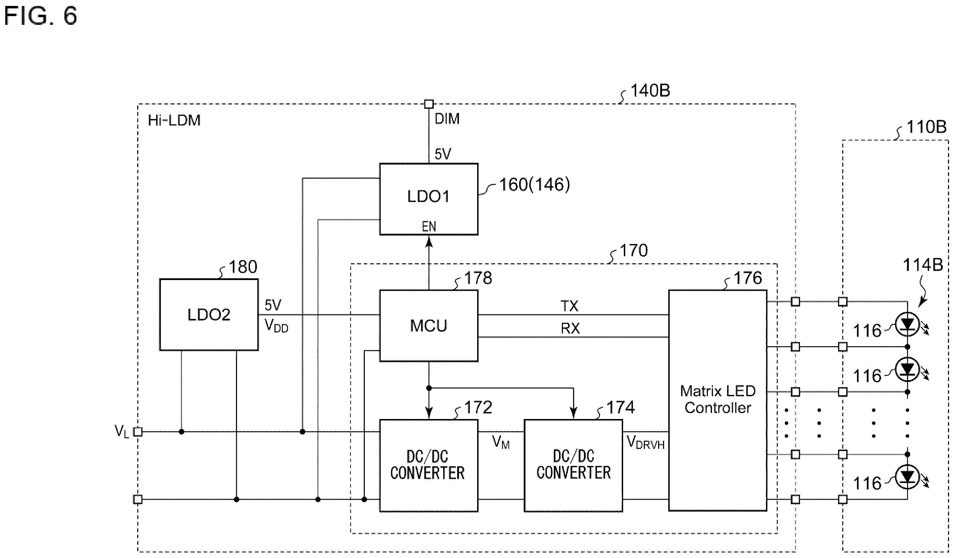

Fig. 6 is a block diagram illustrating a second drive module 140B according to Embodiment 2. A light-emitting unit 110B has a second semiconductor light-emitting element 114B which is constituted by an LED array having LEDs 116 arranged in a matrix.

A second lighting circuit 170B has DC/DC converters 172 and 174, an LED controller 176, and a microcontroller 178.

The DC/DC converter 172 is a boost converter, structured to boost the input voltage V_{H}. The DC/DC converter 174 is a step-down converter, structured to step down an output voltage V_{M} of the preceding DC/DC converter 172, and to generate a drive voltage V_{DRVH}.

The LED controller 176 receives the drive voltage V_{DRVH}, and individually turns on or off the plurality of LEDs 116, under control by the microcontroller 178.

The linear regulator 180 is activated upon supply thereto of the input voltage V_{L}, and generates a power supply voltage V_{DD} of 5 V. The power supply voltage V_{DD} is supplied to the microcontroller 178 or the like.

The microcontroller 178 is activated upon supply thereto of the power supply voltage V_{DD}. Upon activated, the microcontroller 178 supplies an enable signal to an enable terminal EN of the linear regulator 160, to run the linear regulator 160. This causes assertion of the dimming instruction signal DIM.

Upon activated, the microcontroller 178 also controls the LED controller 176, so as to form a predetermined high beam light distribution.

### (Embodiment 3)

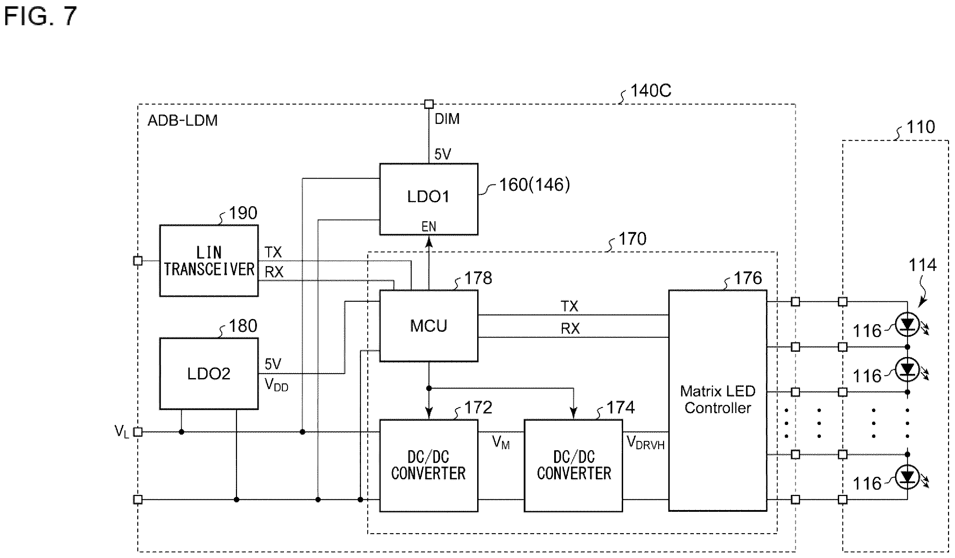

Fig. 7 is a block diagram illustrating a second drive module 140C according to Embodiment 3. The basic structure of the second drive module 140C is similar to that of the second drive module 140B in Fig. 6. Difference is that, while the second drive module 140B has a fixed light distribution for the high beam illumination, the second drive module 140C is allowed for an adaptive driving beam (ADB) function, enabling adaptive control of the high beam light distribution during the high beam illumination, according to the situation ahead of the vehicle. For example, upon detection of an oncoming vehicle or a preceding vehicle, the control takes place so as to dim or shade the part of them.

The second drive module 140C has a transceiver 190. The transceiver 190, which is an interface such as local interconnect network (LIN) or controller area network (CAN), receives information necessary for the ADB control from the vehicle.

The microcontroller 178 controls the LED controller 176 with reference to the information received by the transceiver 190, individually controls on and off of the plurality of LEDs 116, thereby controlling the high beam light distribution.

### (Embodiment 4)

Embodiment 4 relates to a telltale function.

The vehicle has, installed thereon, a function called telltale, for the purpose of notifying the user any abnormality occurred in the vehicle, by light indication. The telltale is typically exemplified by various warning lamps built in an instrument panel.

Prior bulb-type headlight does not light on if the bulb has been burned out, so that the user can clearly notice the abnormality. The telltale has, therefore, been unnecessary for the prior headlight.

Recent headlight has become more likely to use LED as the light source. The LED, featured by its high flexibility of layout, has an advantage that combination of a plurality thereof can form a more suitable light distribution. However, in a case where a part of the LEDs has gone out, the lamp itself can be kept light on despite the light distribution is not suitably formed, thus disabling the user from recognizing abnormality. The LED-type vehicle lamp, therefore, needs the telltale (UN Regulation No. 48 "Uniform Provisions Concerning the Approval of Vehicles with Regard to the Installation of Lighting and Light-Signaling Devices", R48, Article 6.2.8).

Warning lamps for notifying abnormality of the head lamp, if built into an instrument panel, push up cost of the vehicle body.

Embodiment 4 will describe provision of a vehicle lamp that no longer needs the telltale.

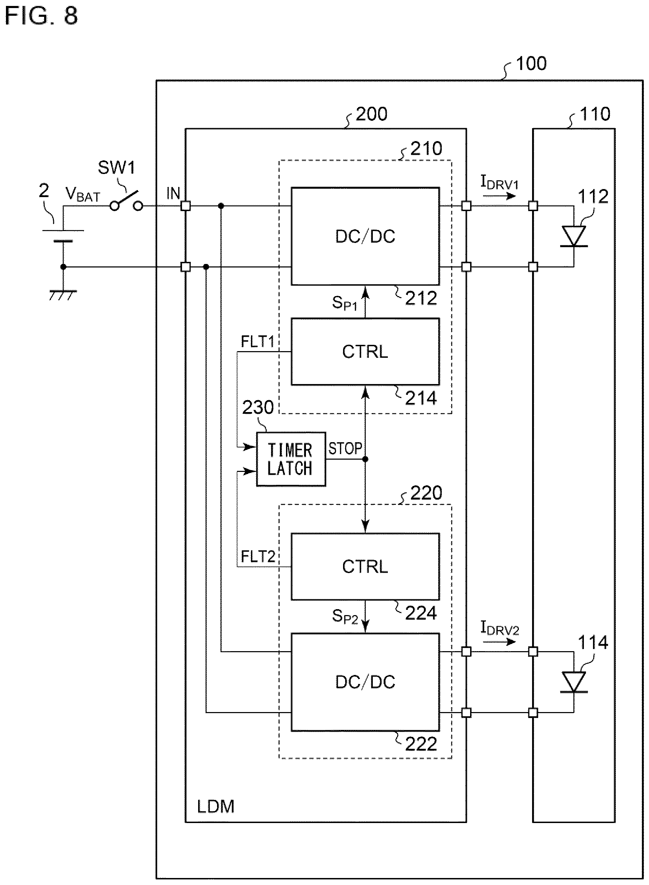

Fig. 8 is a block diagram illustrating a vehicle lamp 100 according to Embodiment 4. The vehicle lamp 100 is a low beam lamp, and has the light-emitting unit 110 and an LED drive module (LDM) 200.

The light-emitting unit 110 includes the first semiconductor light-emitting element 112 for low beam illumination, and the second semiconductor light-emitting element 114 for low beam illumination. The lights emitted from the first semiconductor light-emitting element 112 and the second semiconductor light-emitting element 114 pass through an unillustrated optical system, to form a low beam light distribution ahead of the vehicle. For example, the light emitted from the first semiconductor light-emitting element 112 is directed to an upper part of a low beam illumination area, meanwhile the light emitted from the second semiconductor light-emitting element 114 is directed to a lower part of the low beam illumination area.

The drive module 200 has an input terminal IN connected through the low beam switch SW1 to the battery 2. During the low beam illumination, the low beam switch SW1 turns on, and the battery voltage V_{BAT} is supplied to the input terminal IN. The drive module 200 operates with use of the battery voltage V_{BAT} supplied to the input terminal IN, as the power supply voltage. That is, the supply of the battery voltage V_{BAT} to the input terminal IN serves as the low beam lighting instruction for the vehicle lamp 100.

A first lighting circuit 210 starts operation in response to the low beam lighting instruction, to turn on the first semiconductor light-emitting element 112. The first lighting circuit 210 has an abnormality detection function, and is structured to assert a first fault signal FLT1, upon detection of abnormality.

The second lighting circuit 220 starts operation in response to the low beam lighting instruction, to turn on the second semiconductor light-emitting element 114. The second lighting circuit 220 has an abnormality detection function, and asserts a second fault signal FLT2, upon detection of abnormality.

The first fault signal FLT1 and the second fault signal FLT2 are input to a latch circuit 230. The latch circuit 230 asserts the stop signal STOP, upon assertion of at least either the first fault signal FLT1 or the second fault signal FLT2.

The latch circuit 230 is preferably a timer latch circuit, which is structured to assert the stop signal STOP and to keep the stop signal STOP asserted, if assertion of at least either the first fault signal FLT1 or the second fault signal FLT2 is sustained over a predetermined length of decision time.

The stop signal STOP is supplied to the first lighting circuit 210 and the second lighting circuit 220. The first lighting circuit 210 stops generation of the first drive current I_{DRV1}, in response to assertion of the stop signal STOP, to turn off the first semiconductor light-emitting element 112. The second lighting circuit 220 stops generation of the second drive current I_{DRV2}, in response to assertion of the stop signal STOP, to turn off the second semiconductor light-emitting element 114.

The first lighting circuit 210 has a first DC/DC converter 212 and a first converter controller 214. The first DC/DC converter 212 causes switching according to a pulse modulation signal S_{P1} supplied from the first converter controller 214, and supplies the first drive current I_{DRV1} to the first semiconductor light-emitting element 112. The pulse modulation signal S_{P1} may typically be a pulse width modulation signal, or a pulse frequency modulation signal.

The first DC/DC converter 212 may be a step-down converter, a step-up/down converter, or a boost converter. Type of the first DC/DC converter 212 is selectable according to the number of LEDs in a series connection that constitutes the first semiconductor light-emitting element 112.

The first converter controller 214 generates the pulse modulation signal S_{P1}, so as to bring the first drive current I_{DRV1} generated by the first DC/DC converter close to its reference level I_{REF1}, thereby causing feedback control (constant current control) of the first DC/DC converter 212.

The first converter controller 214 is also structured to enable detection of abnormality of the first semiconductor light-emitting element 112. Type of abnormality and detection method are not particularly limited. For example, the first converter controller 214 may monitor a voltage across the first semiconductor light-emitting element 112, and may determine abnormality upon deviation of the voltage from a predetermined range. Alternatively, the first converter controller 214 may monitor the first drive current I_{DRV1}, and determines abnormality if the current does not converge to the reference level I_{REF1}. The first converter controller 214 may detect short-to-ground or short-to-battery, as the abnormality.

The first converter controller 214 may be constituted with use of a commercially available controller integrated circuit (IC) for DC/DC converter, and a peripheral circuit thereof.

For example, the controller IC may have an abnormality detection function, and a fault pin through which detection of abnormality is notified externally.

For an exemplary case where the controller IC does not have an abnormality detection function, it suffices to constitute an abnormality detection circuit with use of discrete components outside the controller IC.

The controller IC usable herein may have a PWM terminal for PWM dimming. A peripheral circuit in this case may be structured, so that the PWM terminal is fixed to low, in response to assertion of the stop signal STOP. Alternatively, the peripheral circuit may be structured with use of the controller IC having an enable terminal, so that the enable terminal is fixed to low, in response to assertion of the stop signal STOP.

The second lighting circuit 220 has a second DC/DC converter 222 and a second converter controller 224, and is structured similarly to the first lighting circuit 210.

The structure of the vehicle lamp 100 has been described above.

In this structure, all LEDs turn off, upon detection of failure either in the first lighting circuit 210 or the second lighting circuit 220. This exempts from requirements on visual telltale, so that the telltale will be no longer necessary.

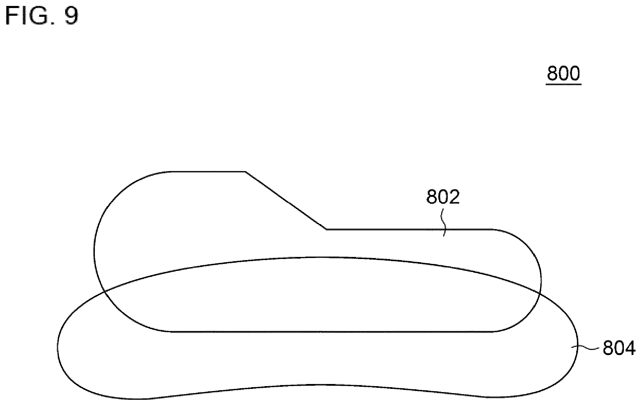

Fig. 9 is drawing illustrating an exemplary low beam light distribution 800 of a vehicle lamp 100A illustrated in Fig. 8. The low beam light distribution 800 contains a main low beam part 802, and an additional low beam part 804. The main low beam part 802 is formed by the light emitted from the first semiconductor light-emitting element 112, meanwhile the additional low beam part 804 is an auxiliary light distribution that widely illuminates below and side of the main low beam part 802, and is formed by the light emitted from the second semiconductor light-emitting element 114.

Having described the embodiments according to the present disclosure with use of specific terms, the description is merely illustrative for better understanding, and by no means limits the disclosure or the claims. The scope of the present invention is defined by the claims, and therefore encompasses any embodiment, Example, and Modified Example having not been described above.

### INDUSTRIAL APPLICABILITY

The present disclosure relates to a vehicle lamp used for automobile or the like.

### REFERENCE SIGNS LIST

2 battery, SW1 low beam switch, SW2 high beam switch, 100 vehicle lamp, 110 light-emitting unit, 112 first semiconductor light-emitting element, 114 second semiconductor light-emitting element, 120 first drive module, 122 first DC/DC converter, 124 first converter controller, 126 first interface circuit, 140 second drive module, 150 second lighting circuit, 152 second DC/DC converter, 154 second converter controller, 146 second interface circuit, 130 derating circuit, 160 linear regulator, 132 temperature derating circuit, 134 dimming circuit, 170B, 170C lighting circuit, 172, 174 DC/DC converter, 176 LED controller, 178 microcontroller, 180 linear regulator, 190 transceiver, 200 drive module, 210 first lighting circuit, 212 first DC/DC converter, 214 first converter controller, 220 second lighting circuit, 222 second DC/DC converter, 224 second converter controller, 230 latch circuit, FLT1 first fault signal, FLT2 second fault signal, STOP stop signal

## Claims

1. A vehicle lamp comprising:
a light-emitting unit having a first semiconductor light-emitting element for low beam illumination, and a second semiconductor light-emitting element for high beam illumination;
a first drive module structured to drive the first semiconductor light-emitting element; and
a second drive module structured to drive the second semiconductor light-emitting element,
the first drive module comprising:
a first DC/DC converter structured to supply a first drive current to the first semiconductor light-emitting element; and
a first converter controller structured to feedback control the first DC/DC converter, such that the first drive current generated by the first DC/DC converter approaches a first reference level,
the second drive module being structured to transmit a dimming instruction signal to the first drive module, in response to a lighting instruction for the high beam illumination,
and,
the first drive module being structured to reduce the first drive current to a second reference level lower than the first reference level, in response to the dimming instruction signal.

2. The vehicle lamp according to claim 1, wherein the first converter controller has an analog dimming terminal, and the first reference level is based on a dimming voltage generated on the analog dimming terminal, and
the first drive module further includes a dimming circuit structured to reduce the dimming voltage, in response to the dimming instruction signal.

3. The vehicle lamp according to claim 1 or 2, wherein the second drive module comprises a first linear regulator structured to be enabled in response to the lighting instruction for the high beam illumination, and an output voltage of the first linear regulator is supplied as the dimming instruction signal to the first drive module.

4. The vehicle lamp according to claim 3, further comprising:
an interface circuit structured to receive the lighting instruction for the high beam illumination; and
a microcontroller structured to enable the first linear regulator, in response to the lighting instruction received by the interface circuit.

5. The vehicle lamp according to claim 3, wherein the lighting instruction for the high beam illumination is given as a power supply voltage to the second drive module, and
the vehicle lamp further comprises:
a second linear regulator structured to operate upon supply thereto of the power supply voltage; and
a microcontroller structured to start upon supply thereto of an output voltage of the second linear regulator, and to enable the first linear regulator.

6. The vehicle lamp according to claim 1 or 2, being structured to have a fan-less design.

7. A vehicle lamp comprising:
a first semiconductor light-emitting element for low beam illumination;
a second semiconductor light-emitting element for low beam illumination;
a first lighting circuit structured to drive the first semiconductor light-emitting element, and to assert a first fault signal upon detection of abnormality;
a second lighting circuit structured to drive the second semiconductor light-emitting element, and to assert a second fault signal upon detection of abnormality; and
a latch circuit structured to assert a stop signal upon assertion of at least either the first fault signal or the second fault signal,
the first lighting circuit and the second lighting circuit being structured to turn off the first semiconductor light-emitting element and the second semiconductor light-emitting element, in response to assertion of the stop signal.

8. The vehicle lamp according to claim 7, wherein the first lighting circuit is structured to determine abnormality, upon deviation of a voltage across the first semiconductor light-emitting element from a normal range, and
the second lighting circuit is structured to determine abnormality, upon deviation of a voltage across the second semiconductor light-emitting element from a normal range.

9. The vehicle lamp according to claim 7 or 8, wherein each of the first lighting circuit and the second lighting circuit comprises:
a DC/DC converter; and
a controller circuit structured to feedback control the DC/DC converter, such that an output current of the DC/DC converter approaches a target current level.
